# EUROPEAN PATENT APPLICATION

(11) **EP 4 769 686 A1**
(43) Date of publication of application: **01.07.2026**
(21) Application number: 25867232.8
(22) Date of filing: 24.09.2025
(51) Int. Cl.: H01M 50/124, H01M 50/119, H01M 50/121, H01M 50/126, H01M 50/133, H01M 50/105, B32B 15/08, B32B 7/12

(54) **POUCH FILM LAMINATE, POUCH-TYPE BATTERY CASE, AND POUCH-TYPE SECONDARY BATTERY**

(30) Priority: 27.09.2024 KR 20240131685
(71) Applicant: LG ENERGY SOLUTION, LTD., Seoul 07335 (KR)
(72) Inventor: Kim, Gi Woung, Daejeon 34122 (KR); Hwang, Soo Ji, Daejeon 34122 (KR); Song, Dae Woong, Daejeon 34122 (KR); Shin, Ji Hyun, Daejeon 34122 (KR); Lee, Wan Soo, Daejeon 34122 (KR)
(74) Representative: Plasseraud IP
(86) International application number: PCT/KR2025/015020
(87) International publication number: WO 2026/071724

(57) **Abstract**

The present invention relates to a pouch film laminate including a substrate layer, a gas barrier layer, and a sealant layer laminated in sequence, wherein the sealant layer includes a first sealant layer disposed adjacent to the gas barrier layer, and a second sealant layer laminated on the first sealant layer, the second sealant layer includes a polypropylene (PP)-polydimethylsiloxane (PDMS) copolymer, and the polypropylene (PP)-polydimethylsiloxane (PDMS) copolymer includes polydimethylsiloxane (PDMS) in an amount of 1 wt% to 12 wt%.

## Description

### TECHNICAL FIELD

### Cross-reference to Related Applications

This application claims priority from Korean Patent Application No. 10-2024-0131685, filed on September 27, 2024, the disclosure of which is incorporated by reference herein.

### Technical Field

The present invention relates to a pouch film laminate, a pouch-type battery case, and a pouch-type secondary battery.

### BACKGROUND ART

Secondary batteries are used not only in a small-size product including a digital camera, a P-DVD, an MP3P, a mobile phone, a PDA, a portable game device, a power tool, and an e-bike, but also in a large-size product requiring high power, including an electric vehicle or a hybrid vehicle, and a power storage device for storing surplus power generation or new renewable energy and a power storage device for back-up.

A lithium secondary battery is generally prepared in a method where electrode active material slurries are applied onto a positive electrode current collector and a negative electrode current collector to prepare a positive electrode and a negative electrode, respectively, and the electrodes are respectively stacked in one and the other sides of a separator to form an electrode assembly in a certain shape, then the electrode assembly is accommodated in a battery case, an electrolyte is injected thereto, and then the battery case is sealed.

The secondary battery is classified into a pouch type, a can type, and the like according to a material of the case accommodating the electrode assembly. The pouch type is a pouch made of a flexible polymer material accommodating the electrode assembly therein. In addition, the can type is a case made of a metal or plastic material, etc., accommodating the electrode assembly therein.

A pouch-type battery case is prepared in a way that a press processing is performed on a pouch film laminate having flexibility to form a cup part. Then, once the cup part is formed, an electrode assembly is accommodated in an accommodating space of the cup part, and sealed with a sealing part to prepare a secondary battery.

During this press processing, drawing formation is performed by inserting a pouch film into a press equipment, and applying pressure to the pouch film laminate using a punch to stretch out the pouch film laminate. The pouch film laminate is generally formed in multiple layers in which a polymer film such as polyethylene terephthalate is laminated on one side of a gas barrier layer of a metal material, and a sealant layer is laminated on the other side.

Due to the recent increasing demand for high-capacity batteries such as a battery for electric vehicles or ESS batteries, a battery case capable of accommodating more electrode assemblies has been increasingly required. Accordingly, a method of increasing the forming depth of a cup part of the pouch-type battery case, or a two-cup forming method of forming the cup part for each of an upper case and a lower case to increase the volume of the cup part have been tried.

In a preparation of a conventional pouch film laminate, in order to prevent adhesion between the pouch films and facilitate post-processing, a lubricant was included in a sealant layer of the innermost layer of the pouch film, or the lubricant was applied onto a surface of the sealant layer. However, this method had a problem of lubricant substances on the surface of the sealant layer contaminating a mold during the pouch formation in a process of preparing a secondary battery.

Therefore, there are demands for development of a pouch film laminate for improving processibility by preventing the mold contamination, and improving productivity of a secondary battery by reducing the frequency of cleaning.

### DISCLOSURE OF THE INVENTION

### TECHNICAL PROBLEM

The present invention is to solve the above-mentioned problems, and to provide a pouch film laminate, a pouch-type battery case, and a pouch-type secondary battery, where contamination of a mold is prevented to lower the friction coefficient while improving processibility, and occurrence of wrinkles during the formation of a cup part and reduction in formability are improved.

### TECHNICAL SOLUTION

[1] The present invention provides a pouch film laminate including a substrate layer, a gas barrier layer, and a sealant layer laminated in sequence, wherein the sealant layer includes a first sealant layer disposed adjacent to the gas barrier layer and a second sealant layer laminated on the first sealant layer, the second sealant layer includes a polypropylene (PP)-polydimethylsiloxane (PDMS) copolymer, and the polypropylene (PP)-polydimethylsiloxane (PDMS) copolymer includes polydimethylsiloxane (PDMS) in an amount of 1 wt% to 12 wt%.
[2] The present invention provides the pouch film laminate of [1] above, wherein the second sealant layer has a thickness of 10 µm or greater.
[3] The present invention provides the pouch film laminate of [1] or [2] above, wherein an amount of lubricant existing on a surface of the sealant layer is less than 1 mg/m².
[4] The present invention provides the pouch film laminate of at least one of [1] to [3] above, wherein the sealant layer has a friction coefficient of 0.05 to 0.30.
[5] The present invention provides the pouch film laminate of at least one of [1] to [4] above, wherein the substrate layer includes any one or more among polyethylene terephthalate (PET) and nylon.
[6] The present invention provides the pouch film laminate of at least one of [1] to [5] above, wherein the substrate layer has a thickness of 5 µm to 70 µm.
[7] The present invention provides the pouch film laminate of at least one of [1] to [6] above, wherein the gas barrier layer includes one or more metals selected from the group consisting of aluminum (Al), copper (Cu), stainless steel (SUS), nickel (Ni), titanium (Ti), and invar.
[8] The present invention provides the pouch film laminate of at least one of [1] to [7] above, wherein the gas barrier layer has a thickness of 20 µm to 100 µm.
[9] The present invention provides the pouch film laminate of at least one of [1] to [8] above, wherein the first sealant layer includes one or more selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, poly-p-phenylene benzobisoxazole, polyarylate, Teflon, and a glass fiber.
[10] The present invention provides the pouch film laminate of at least one of [1] to [9] above, wherein the sealant layer has a thickness of 30 µm to 130 µm.
[11] The present invention provides the pouch film laminate of at least one of [1] to [10] above, wherein the pouch film laminate has a thickness of 120 µm to 300 µm.
[12] The present invention provides a pouch-type battery case prepared by performing a drawing formation on the pouch film laminate according to at least one of [1] to [11] above.
[13] The present invention provides a pouch-type secondary battery including the pouch-type battery case of [12] above.

### Advantageous Effects

A pouch film laminate according to the present invention includes a polypropylene (PP)-polydimethylsiloxane (PDMS) copolymer on a surface of a second sealant layer to decrease the friction coefficient, and without a separate lubricant, the cycle of cleaning the lubricant on a mold may be reduced to thereby improve the processibility, and by preventing wrinkles occurring during a cup part forming, formability of the pouch film laminate is improved.

### BRIEF DESCRIPTION OF THE DRAWINGS

The drawings accompanied in the present specification illustrate preferred embodiments of the present invention, and serve to better understand the technical idea of the present invention together with the content of the present invention previously described, therefore, the present invention is not to be construed as limited to only the matters described in the drawings. Meanwhile, a shape, size, accumulation, ratio, or the like of element in the drawing accompanied in this specification may be exaggerated to emphasize the description more clearly.
FIG. 1 is a cross-sectional view of a pouch film laminate according to the present invention.
FIG. 2 is an exploded diagram of a secondary battery according to the present invention.

### MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

In this specification, the terminology used herein is for describing embodiments and is not intended to limit the present invention. In this specification, the singular forms are intended to include the plural forms as well, unless the context clearly indicates otherwise. The terms "comprises" and/or "comprising" used in this specification do not exclude the presence or addition of one or more other components other than the components stated.

Hereinafter, the present invention will be described in detail.

A pouch film laminate, a pouch-type battery case, and a pouch-type secondary battery, according to the present invention, may include at least one among components disclosed below, and may include any combination of the components, technically possible, among the components below.

### <Pouch Film Laminate>

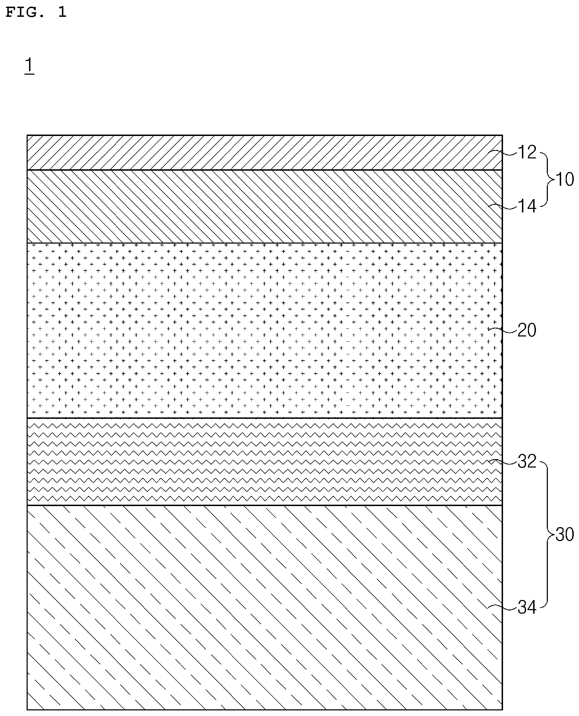

First, a pouch film laminate 1 according to the present invention will be described. FIG. 1 illustrates the pouch film laminate 1 according to the present invention.

Referring to FIG. 1, the pouch film laminate 1 according to the present invention may include a substrate layer 10, a gas barrier layer 20, and a sealant layer 30 laminated in sequence, and the sealant layer 30 may include a first sealant layer 32 and a second sealant layer 34. In the pouch film laminate 1, the substrate layer 10, the gas barrier layer 20, the first sealant layer 32, and the second sealant layer 34 may be laminated in sequence.

In a preparation of a conventional pouch film laminate, in order to prevent adhesion between the pouch films laminates and facilitate post-processing, a lubricant was made to exist on a surface of a sealant layer in a method for including the lubricant in the sealant layer of the innermost layer of the pouch film, applying the lubricant onto the surface of the sealant layer, or the like. However, due to the lubricant on the surface of the sealant layer, a mold was contaminated, requiring more frequent cleansing of the mold, so that there was a problem of reduced processibility.

However, in a case where the second sealant layer includes a polypropylene (pp)-polydimethylsiloxane (PDMS) copolymer containing polydimethylsiloxane (PDMS) in an amount of 1 wt% to 12 wt% as in the present invention, due to characteristics of the polydimethylsiloxane (PDMS), the friction coefficient may decrease, and chemical resistance may be excellent, and thus stable performance may be maintained in various environments, and therefore, the pouch film laminate with excellent processibility and formability may be prepared, compared to the case of including or applying the lubricant.

Hereinafter, referring to FIG. 1, each component of the pouch film laminate according to the present invention is described in more detail.

### (1) Substrate Layer

The substrate layer 10 may be disposed on the outermost layer of a battery case to protect an electrode assembly from external impact and to insulate the electrode assembly electrically, and the substrate layer 10 may include any one or more among polyethylene terephthalate (PET) and nylon.

According to an embodiment, the substrate layer 10 may have a laminated structure of a polyethylene terephthalate (PET) film 12 and a nylon film 14. At this time, it is preferred that the nylon film 14 is disposed on a gas barrier layer 20 side, that is, disposed on an inner side, and the polyethylene terephthalate film 12 is disposed on a surface side of the battery case.

Polyethylene terephthalate (PET) is excellent in durability and electrical insulation, and therefore, when the PET film is disposed on the surface side, excellent durability and insulation are exhibited. However, since the PET film has weak adhesiveness to an aluminum alloy thin film constituting the gas barrier layer 20, and has a different stretching behavior, in case of disposing the PET film on the gas barrier layer side, separation between the substrate layer and the gas barrier layer may occur during a forming process, and the gas barrier layer fails to stretch uniformly, causing a problem of decreased formability. In comparison, since the nylon film has a similar stretching behavior with the aluminum alloy thin film constituting the gas barrier layer 20, disposing the nylon film between the polyethylene terephthalate and the gas barrier layer may have the effect of improving the formability.

The substrate layer 10 may have a thickness of 5 µm to 70 µm, preferably 7 µm to 65 µm, and more preferably 10 µm to 60 µm. When the above range is satisfied, excellent formability and strength after the formation may be exhibited.

In addition, in a case where the substrate layer 10 has a laminated structure of the polyethylene terephthalate (PET) film 12 and the nylon film 14, the polyethylene terephthalate film may have a thickness of 5 µm to 30 µm, preferably 7 µm to 30 µm, and more preferably 10 µm to 27 µm, and the nylon film may have a thickness of 10 µm to 60 µm, preferably 10 µm to 55 µm, and more preferably 15 µm to 50 µm. When the thicknesses of the polyethylene terephthalate film and the nylon film fall within the above ranges, respectively, excellent formability and strength after the formation may be exhibited.

### (2) Gas Barrier Layer

The gas barrier layer 20 is laminated between the substrate layer 10 and the sealant layer 30 to secure mechanical strength of a pouch, and block access of gas or moisture from the outside of a secondary battery, and to prevent electrolyte leakage from the inside of a pouch-type battery case.

The gas barrier layer 20 may be made of a metal. For example, the gas barrier layer may be a metal thin film including one or more metals selected from the group consisting of aluminum (Al), copper (Cu), stainless steel (SUS), nickel (Ni), titanium (Ti), and Invar, but is not limited thereto.

According to an embodiment of the present invention, the gas barrier layer 20 may be made of an aluminum alloy thin film. In case of forming the gas barrier layer 20 using the aluminum alloy thin film, the gas barrier layer 20 may be light-weighted while securing mechanical strength exceeding a certain level, and may secure supplementation for electrochemical property concerned with an electrode assembly and an electrolyte, heat dissipation, and the like. The aluminum alloy thin film may include an element other than aluminum (Al). For example, the aluminum alloy thin film may include one or more selected from the group consisting of iron (Fe), copper (Cu), chrome (Cr), manganese (Mn), nickel (Ni), magnesium (Mg), silicon (Si), and zinc (Zn).

In another embodiment, the gas barrier layer 20 may be made of a stainless-steel thin film. Preferably, the gas barrier layer 20 may be prepared by forming and/or processing the stainless-steel thin film. The gas barrier layer 20 made of stainless steel, which has a relatively low thermal conductivity, may be effective in preventing or delaying thermal diffusion to another cell in case of thermal runaway, and due to relatively high toughness, occurrence of cracks on a pouch may be suppressed during the use of a pouch-type battery. Stainless steel may include one or more selected from the group consisting of an element other than iron (Fe), for example, copper (Cu), chrome (Cr), manganese (Mn), nickel (Ni), magnesium (Mg), silicon (Si), and zinc (Zn).

The gas barrier layer 20 may have a thickness of 20 µm to 100 µm, preferably 30 µm to 90 µm, and more preferably 40 µm to 85 µm. When the above range is satisfied, it is desirable in that access of gas, moisture, or the like from the outside of the secondary battery may be properly blocked, and the electrolyte leakage from the inside of the pouch-type battery case may be properly prevented. In addition, formability in a cup part formation and gas-barrier performance may be improved.

### (3) Sealant Layer

When a pouch-type battery case 210, accommodating an electrode assembly therein, is sealed, the sealant layer 30 is to seal the inside of the pouch-type battery case completely from the outside by mutual thermal bonding at a sealing part 250. For this, the sealant layer 30 may be made of a material having excellent thermal bonding strength.

The sealant layer 30 according to the present invention includes a first sealant layer 32 and a second sealant layer 34. In this case, the first sealant layer 32 is a layer disposed adjacent to the gas barrier layer 20, and the second sealant layer 34 is a layer disposed on the first sealant layer 32. The first sealant layer 32 and the second sealant layer 34 may include materials of different qualities and/or properties.

The sealant layer 30 may have a thickness of 30 µm to 130 µm, preferably 40 µm to 120 µm, and more preferably 60 µm to 100 µm. When the thickness of the sealant layer falls within the above ranges, there are effects of securing formability of the pouch film laminate while securing sealing strength for the sealing part.

An amount of lubricant existing on a surface of the sealant layer 30 may be less than 1 mg/m², preferably less than 0.8 mg/m², and more preferably, the lubricant may not be included. Even though the lubricant is included in the above range, since the sealant layer according to the present invention includes a separate polypropylene (PP)-polydimethylsiloxane (PDMS) copolymer, excellent slipping quality and formability may be exhibited, and appropriate frictional force may be maintained, and since a mold is less contaminated due to the small amount of lubricant, the cleaning cycle for the lubricant may be extended, thereby improving processibility.

The sealant layer 30 may have a friction coefficient of 0.05 or greater, preferably 0.1 or greater, and more preferably 0.12 or greater, and 0.30 or less, preferably 0.2 or less, and more preferably 0.18 or less. When the above range is satisfied, the slipping quality of the sealant layer may be appropriately improved, so that occurrence of defects such as cracks may be reduced, despite physical deformation of the sealant layer occurring during the formation, and a whitening phenomenon may be reduced.

Hereinafter, the first sealant layer 32 and the second sealant layer 34, previously described, will be each described in more detail.

### 1) First Sealant layer

The first sealant layer 32 is characterized by being disposed adjacent to the gas barrier layer 20 as previously described.

The first sealant layer 32 may be made of a polymer material. Preferably, the first sealant layer 32 may include one or more selected from the group consisting of polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber, and more preferably, may include a polyolefin-based resin such as polypropylene (PP) and/or polyethylene (PE). In this case, polypropylene may include cast polypropylene (CPP), acid modified polypropylene (PPa), or a polypropylene-butylene-ethylene ternary copolymer. More preferably, the first sealant layer may include one or more selected from polypropylene (PP), acid modified polypropylene (PPa), and cast polypropylene (CPP).

It is particularly preferred for the first sealant layer 32 to include the acid modified polypropylene (PPa) in order to secure long-term adhesion performance between the gas barrier layer 20 and the first sealant layer 32. Here, the acid modified polypropylene may be maleic anhydride polypropylene (MAH PP).

The first sealant layer 30 may have a thickness of 10 µm to 100 µm, preferably 10 µm to 60 µm, and more preferably 10 µm to 40 µm. When the thickness of the first sealant layer 32 falls within the above range, sealing durability and insulation of the sealing part may be improved, and with excellent yield strength, sealing strength of the sealing part may be improved. Furthermore, since the total thickness of the pouch film laminate is not excessively thick, formability may be improved, and due to an increased accommodating space for the electrode assembly in the pouch-type battery case prepared by forming the pouch film laminate, energy density may be improved, compared to the volume of a secondary battery.

### 2) Second Sealant layer

The second sealant layer 34 is characterized by being laminated on the first sealant layer 32 as previously described.

The second sealant layer 34 according to the present invention may be characterized by including a polypropylene (PP)-polydimethylsiloxane (PDMS) copolymer, and may preferably include an additional material with insulation, corrosion-resistance, and sealing property.

For example, the second sealant layer 34 according to the present invention may further include, together with the polypropylene(PP)-polydimethylsiloxane (PDMS) copolymer, one or more materials selected from the group consisting of, preferably, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, Teflon, and a glass fiber.

In a case where the second sealant layer includes only the polypropylene (PP), flexibility may be insufficient, and the surface energy is high, so that there is a problem of decreasing adhesion in a sealing process or a problem of a limited forming depth, and in a case where the second sealant layer includes only the polydimethylsiloxane (PDMS), due to low mechanical strength characteristics, there is a problem that the structure is not maintained after the formation, and a film is stretched or does not adhere well to the surface in a sealing process, causing a problem of wrinkles.

Accordingly, in the present invention, since the polypropylene (PP)-polydimethylsiloxane (PDMS) copolymer is included in the second sealant layer, the forming depth may be sufficiently secured, and also strength and flexibility are both secured, and better adhesion and strength may be exhibited in the sealing process. In addition, due to the excellent characteristics of the polypropylene (PP)-polydimethylsiloxane (PDMS) copolymer itself, a separate lubricant is not needed, and accordingly, compared to the case of using the lubricant, the mold is less contaminated, so that the cleaning cycle may be extended and processibility may thus be excellent, and since the rate of defects caused by the contamination decreases, there are effects of improving processibility.

The polypropylene (PP)-polydimethylsiloxane (PDMS) copolymer includes polydimethylsiloxane (PDMS) in an amount of 1 wt% to 12 wt%. When the polypropylene (PP)-polydimethylsiloxane (PDMS) copolymer includes the polydimethylsiloxane (PDMS) in an amount less than 1 wt%, low surface-energy characteristics of the polydimethylsiloxane (PDMS) is not sufficiently exhibited, so that the forming depth is insufficient, and strong deformation resistance during the formation causes a problem of occurrence of wrinkles, and when including in an amount greater than 12 wt%, due to the flexibility of the polydimethylsiloxane (PDMS), appropriate strength may not be maintained during the formation, due to weak adhesion between the films, slipping occurs on a sealing surface, causing decrease in sealing strength, and due to reduction in thermal stability, there is a risk of deformation during the formation, and there is a problem of decreased tensile strength.

For example, the polypropylene (PP)-polydimethylsiloxane (PDMS) copolymer may preferably include the polydimethylsiloxane (PDMS) in an amount of 2 wt% or greater, 3 wt% or greater, 4 wt% or greater, 5 wt% or greater, or 6 wt% or greater, and may preferably include 11 wt% or less, 10 wt% or less, or 9 wt% or less. When the above range is satisfied, due to the appropriate amount of polydimethylsiloxane (PDMS), flexibility and deformation of the copolymer may increase, so that there are effects of improving formability and securing a sufficient forming depth, and by preventing the film from being too stiff or excessively flexible, a stable form may be maintained during the formation, and due to increased adhesion strength between the films, there are effects of improving sealing strength.

The second sealant layer 34 may have a thickness of 10 µm or greater, preferably, 15 µm or greater, 20 µm or greater, 25 µm or greater, 30 µm or greater, 35 µm or greater, or 40 µm or greater, and 110 µm or less, and more preferably 40 µm to 110 µm. When the thickness of the second sealant layer falls within the above range, the sealing strength of the sealing part is secured, wrinkles do not occur, and the forming depth is secured, so that there are effects of securing formability of the pouch film laminate.

The pouch film laminate according to the present invention as above may be prepared in a preparation method of a pouch film laminate known in the relevant art. For example, the pouch film laminate according to the present invention may be prepared through a method in which the substrate layer 10 is bonded to an upper surface of the gas barrier layer 20 through an adhesive, the sealant layer 30 is formed on a lower surface of the gas barrier layer 20 through coextrusion or an adhesion layer, and a silicon-based release coating layer 40 is applied on a lower surface of the sealant layer 30 through heat treatment, and may be prepared through a method such as dry lamination or sandwich lamination. However, the method of preparing the pouch film laminate is not limited thereto.

The pouch film laminate according to the present invention may have a thickness of 120 µm to 300 µm, preferably 130 µm to 280 µm, and more preferably 140 µm to 250 µm. When the thickness of the pouch film laminate falls within the above ranges, it may be possible to increase the forming depth while minimizing the reduction in space for accommodating the battery, decrease in sealing durability, etc., due to the increase in thickness of the pouch laminate.

### <Pouch-type Secondary Battery>

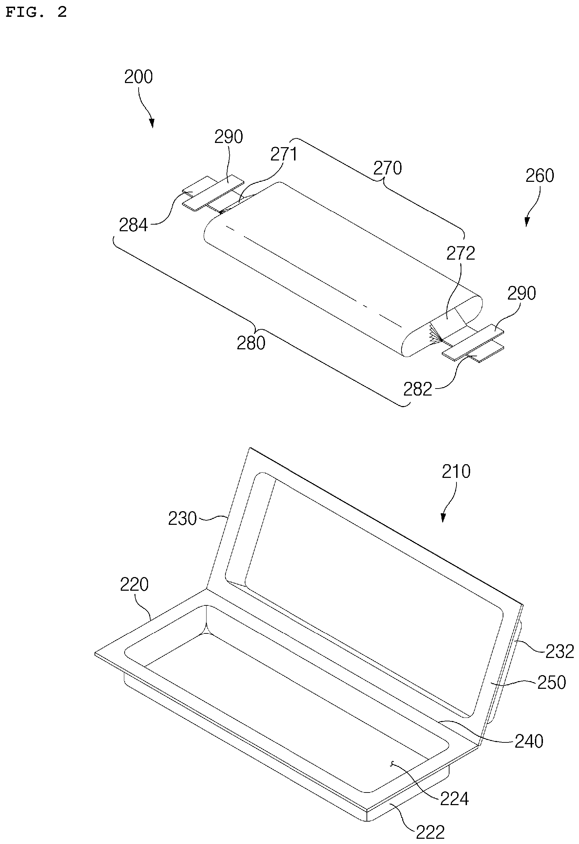

Next, a pouch-type secondary battery 200 according to the present invention will be described. FIG. 2 is an exploded view of the pouch-type secondary battery 200 according to the present invention.

As illustrated in FIG. 2, the pouch-type secondary battery 200 according to the present invention may include a pouch-type battery case 210 prepared by formation of the pouch film laminate previously described, and an electrode assembly 260 accommodated in the pouch-type battery case 210. Preferably, the pouch-type secondary battery 200 according to the present invention may include the pouch-type battery case 210, the electrode assembly 260, an electrode lead 280, an insulation part 290, and an electrolyte (not shown).

Hereinafter, referring to FIG. 2, each component of the pouch-type secondary battery according to the present invention will be described in more detail.

### (1) Pouch-Type Battery Case

The pouch-type battery case 210 may be prepared by forming the pouch film laminate according to the present invention previously described. The pouch-type battery case 210 may accommodate the electrode assembly 260 therein. Since detailed constitution and property of the pouch film laminate are the same as those previously described, detailed description thereof is omitted.

The pouch film laminate may be formed by drawing and stretched by a punch, etc., to prepare the pouch-type battery case 210. As a result, the pouch-type battery case 210 may include a cup part 222 and an accommodating part 224. The accommodating part 224 may be a space for accommodating the electrode assembly, which may refer to an accommodating space formed in the shape of a pouch inside the cup part 222 as the cup part 222 is formed.

According to an embodiment of the present invention, the pouch-type battery case 210 may include a first case 220 and a second case 230 as illustrated in FIG. 3. The first case 220 may include the accommodating part 224 capable of accommodating the electrode assembly 260, and the second case 230 may cover the accommodating part 224 from above such that the electrode assembly 260 does not escape out of the battery case 210. The first case 220 and the second case 230 may be prepared in a way that one side of each is connected to each other, as illustrated in FIG. 3, but an embodiment is not limited thereto, and may be prepared in various ways, for example, being prepared separately.

According to another embodiment of the present invention, in case of forming a cup part in the pouch film laminate, two symmetrical cup parts 222 and 232 may be formed by drawing side by side on one pouch film laminate. In this case, the cup parts 222 and 232 may be formed respectively in the first case 220 and the second case 230 as illustrated in FIG. 3. After the electrode assembly 260 is accommodated in the accommodating part 224 arranged in the cup part 222 of the first case 220, a bridge part 240, formed between the two cup parts 222 and 232, may be folded such that the two cup parts 222 and 232 face each other. In this case, the cup part 232 of the second case 230 may accommodate the electrode assembly 260 from above. Therefore, since the two cup parts 222 and 232 accommodate one electrode assembly 260, the electrode assembly 260 having a larger thickness may be accommodated than the case where there is one cup part 222. In addition, as the pouch-type battery case 210 is folded, one corner of the secondary battery 200 may be formed, the number of corners to be sealed may be reduced when a sealing process is performed later. Accordingly, the processing speed for the pouch-type secondary battery 200 may be improved, and the number of sealing processes may be reduced.

The pouch-type battery case 210 may be sealed in a state where the electrode assembly 260 is accommodated such that a part of the electrode lead 280 to be described later, which is a terminal part, is exposed. Preferably, when the electrode lead 280 is connected to an electrode tab 270 of the electrode assembly 260, and an insulation part 290 is formed on a portion of the electrode lead 280, the electrode assembly 260 may be accommodated in the accommodating part 224 provided in the cup part 222 of the first case 220, and the second case 230 may cover the accommodating part 224 from above. Next, an electrolyte may be injected into the accommodating part 224, and the sealing part 250, formed on boundaries of the first case 220 and the second case 230 may be sealed.

The sealing part 250 may perform a role of sealing the accommodating part 224. Preferably, the sealing part 250 may be formed along the boundary of the accommodating part 224 to seal the accommodating part 224. The temperature at which the sealing part 250 is sealed may be 180 °C to 250 °C, preferably, 200 °C to 250 °C, and more preferably 210 °C to 240 °C. When the sealing temperature falls within the above numerical ranges, the pouch-type battery case 210 may have sufficient sealing strength by thermal bonding.

### (2) Electrode Assembly

The electrode assembly 260 may be inserted in the pouch-type battery case 210 and is injected with an electrolyte, and then sealed by the pouch-type battery case 210.

The electrode assembly 260 may be formed by a positive electrode, a separator, and a negative electrode that are sequentially stacked. Preferably, the electrode assembly 260 may include two types of electrodes which are the positive electrode and negative electrode, and the separator disposed between the electrodes in order to insulate the electrodes from each other.

The positive electrode and the negative electrode may each have a structure where an active material slurry is applied onto an electrode current collector in the form of a metal foil or metal mesh containing aluminum and copper, respectively. In general, the slurry may be formed by an active material in a particle form, an auxiliary conductor, a binder, and a conductive material being agitated with a solvent added. The solvent may be removed in the following process.

The slurry in which the electrode active material, the binder, and/or the conductive material are mixed is applied onto a positive electrode current collector and a negative electrode current collector to prepare a positive electrode and a negative electrode, respectively, and the positive electrode and the negative electrode are stacked on respective sides of the separator to form the electrode assembly 260 in a certain shape. The type of the electrode assembly 260 may include a stack type, a jelly roll type, a stack and folding type, etc., but is not limited thereto.

The electrode assembly 260 may include an electrode tab 270.

The electrode tab 270 may be connected to each of the positive electrode and the negative electrode of the electrode assembly 260, and may protrude from the electrode assembly 260 to the outside to serve as a movement path of electrons between the inside and outside of the electrode assembly 260. The electrode current collector included in the electrode assembly 260 may include a portion applied with an electrode active material and an end portion not applied with the electrode active material that is a non-coated part. The electrode tab 270 may be formed by cutting the non-coated part, or formed by connecting a separate conductive member to the non-coated part through ultrasonic welding, etc. As illustrated in FIG. 2, the electrode tab 270 may also protrude in different directions of the electrode assembly 260, but is not limited thereto, and may protrude in various directions, for example, protrude side by side in the same direction from one side.

### (3) Electrode Lead

The electrode lead 280 may supply electricity to the outside of the secondary battery 200. The electrode lead 280 may be connected to the electrode tab 270 of the electrode assembly 260 through spot welding, etc.

The electrode lead 280 may be connected to the electrode assembly 260, and via the sealing part 250 to protrude to the outside of the pouch-type battery case 210. Preferably, one end of the electrode lead 280 may be connected to the electrode assembly 260, particularly to the electrode tab 270, and the other end of the electrode lead 280 may protrude to the outside of the pouch-type battery case 210.

The electrode lead 280 may include a positive electrode lead 282 connected to one end of a positive electrode tab 272 and extending in a direction in which the positive electrode tab 272 protrudes, and a negative electrode lead 284 connected to one end of a negative electrode tab 274 and extending in a direction in which the negative electrode tab 274 protrudes. The other end of each of the positive electrode lead 282 and the negative electrode lead 284 may protrude to the outside of the battery case 210. Therefore, electricity generated inside the electrode assembly 260 may be supplied to the outside. In addition, since the positive electrode tab 272 and the negative electrode tab 274 protrude in different directions, the positive electrode lead 282 and the negative electrode lead 284 may also extend in different directions. The positive electrode lead 282 and the negative electrode lead 284 may have different materials. That is, the positive electrode lead 282 may have an aluminum (Al) material same as that of the positive electrode current collector, and the negative electrode lead 284 may have a copper (Cu) material, same as that of the negative electrode current collector, or a nickel (Ni)-coated copper material A portion of the electrode lead 280, protruding to the outside of the battery case 210, may act as a terminal part, which may be electrically connected to an external terminal.

### (4) Insulation Part

The insulation part 290 may prevent the electricity, generated from the electrode assembly 260, from flowing to the battery case 210 through the electrode lead 280, and maintain the sealing of the battery case 210. For this, the insulation part 290 may be formed as a non-conductor, which is nonconductive so that it does not conduct electricity well. In general, for the insulation part 290, a relatively thin insulating tape or film that is easy to adhere to the electrode lead 280 may be widely used, but the type is not limited thereto, and any member capable of insulating the electrode lead 280 may be used.

The insulation part 290 may be disposed surrounding the outer circumference of the electrode lead 280. Preferably, at least a portion of the electrode lead 280 may be surrounded by the insulation part 290. In this case, the insulation part 290 may be disposed between the electrode lead 280 and the pouch-type battery case 210. The insulation part 290 may be positioned limited to the sealing part 250 where the first case 220 and the second case 230 of the pouch-type battery case 210 are thermally bonded, and may bond the electrode lead 280 to the battery case 210.

### (5) Electrolyte

The pouch-type secondary battery 200 according to the present invention may further include an electrolyte injected into the pouch-type battery case 210. The electrolyte is to move lithium ions generated by electrochemical reaction of an electrode when the secondary battery 200 is charged/discharged, and may include a non-aqueous organic electrolyte solution which is a mixture of a lithium salt and organic solvents, or a polymer using a polymer electrolyte. Furthermore, the electrolyte may include a sulfide-based, an oxide-based, or a polymer-based solid electrolyte, and this solid electrolyte may have flexibility enabling easy deformation by external force.

Hereinafter, the present invention is described in more detail through particular examples. However, the following examples are only intended to help understanding of the present invention, and the scope of the present invention is not limited thereto. It is obvious to those skilled in the art that various changes and modifications are possible within the scope and technical spirit of the present description, and it is natural that such changes and modifications fall within the scope of the appended claims.

### Example and Comparative Example

### Example 1: Preparation of Pouch Film Laminate

A first sealant layer in a total thickness of 30 µm, including acid modified polypropylene (PPa) and polypropylene (PP) sequentially laminated, was prepared, and a second sealant layer in a total thickness of 70 µm, including a polypropylene (PP)-polydimethylsiloxane (PDMS) copolymer, was laminated on the first sealant layer. At this time, the polypropylene (PP)-polydimethylsiloxane (PDMS) copolymer was prepared to include polydimethylsiloxane (PDMS) in an amount of 8 wt%.

Thereafter, a second adhesion film, a nylon film in a thickness of 25 µm, a first adhesion film, and a polyethylene terephthalate (PET) film in a thickness of 12 µm were sequentially laminated on one side of an aluminum alloy thin film in a thickness of 60 µm, and a sealant layer including the first sealant layer and the second sealant layer was sequentially laminated on the other side of the aluminum alloy thin film.

As a result, a pouch film laminate was prepared in a structure where the second sealant layer/ first sealant layer/ aluminum alloy thin film/ second adhesion film/ nylon film/ first adhesion film/ polyethylene terephthalate film, prepared as above, were sequentially laminated.

### Example 2: Preparation of Pouch Film Laminate

A pouch film laminate was prepared in the same method as that of Example 1, except that the polydimethylsiloxane (PDMS) was included in an amount of 3 wt% on the basis of the total weight of the polypropylene (PP)-polydimethylsiloxane (PDMS) copolymer.

### Example 3: Preparation of Pouch Film Laminate

A pouch film laminate was prepared in the same method as that of Example 1, except that the second sealant layer was laminated such that the thickness became 8 µm.

### Comparative Example 1: Preparation of Pouch Film Laminate

A pouch film laminate was prepared in the same method as that of Example 1, except that polypropylene (PP) was used instead of the polypropylene (PP)-polydimethylsiloxane (PDMS) copolymer.

### Comparative Example 2: Preparation of Pouch Film Laminate

A pouch film laminate was prepared in the same method as that of Example 1, except that polydimethylsiloxane (PDMS) was used instead of the polypropylene (PP)-polydimethylsiloxane (PDMS) copolymer.

### Comparative Example 3: Preparation of Pouch Film Laminate

A pouch film laminate was prepared in the same method as that of Example 1, except that polydimethylsiloxane (PDMS) was included in an amount of 0.5 wt% on the basis of the total weight of the polypropylene (PP)-polydimethylsiloxane (PDMS) copolymer.

### Comparative Example 4: Preparation of Pouch Film Laminate

A pouch film laminate was prepared in the same method as that of Example 1, except that the polydimethylsiloxane (PDMS) was included in an amount of 15 wt% on the basis of the total weight of the polypropylene (PP)-polydimethylsiloxane (PDMS) copolymer.

### Comparative Example 5: Preparation of Pouch Film Laminate

A pouch film laminate was prepared in the same method as that of Example 1, except that the second sealant layer was not formed separately, and a lubricant (erucamide) was applied onto a surface of the sealant layer such that the amount of the lubricant became 4 mg/m².

### Comparative Example 6: Preparation of Pouch Film Laminate

A pouch film laminate was prepared in the same method as that of Example 1, except that the second sealant layer was not formed separately, and a lubricant (erucamide) was applied onto a surface of the sealant layer such that the amount of the lubricant became 26 mg/m².

### Experimental Example 1: Measurement of Friction Coefficient

The friction coefficient of each of the pouch film laminates, prepared according to Examples 1 to 3 and Comparative Examples 1 to 6, was measured.

As a method of measuring the friction coefficient, a sled metal having a size of 130 mm (MD direction) x 65 mm(TD direction) and having a weight of 200 g was placed in contact with a silicon-based release coating layer of the pouch film laminate in a size of 300 mm (MD direction) x 200 mm (TD direction), and the friction coefficient was measured.

In detail, the sled metal was moved 100 mm above the sealant layer at a speed of 100 mm/min, and in the 20 mm to 80 mm range, the average value of kinetic friction coefficient values, measured 5 times, was measured as the friction coefficient.

The measurement results were listed in [Table 1] below.

### Experimental Example 2: Evaluation on Formability of Pouch Film Laminate

### (1) Evaluation of forming depth

Formability of each of the pouch film laminates, prepared according to Examples 1 to 3 and Comparative Examples 1 to 6, was evaluated.

As a method of evaluating the formability of the pouch film laminate, the pouch film laminate was cut into the same size of 300 mm (MD direction) X 400 mm (TD direction), and then the maximum forming depth not causing cracks was recorded by changing the forming depth in a battery case forming device having two forming parts each in a size of 61 mm (MD direction) x 159 mm(TD direction). Here, regarding a punch and a forming part of the battery case forming device, corners and edges were filleted, the corner of the punch had a curvature of 2 mm, the edge of the punch had a curvature of 0.5 mm, and the corner of the forming part had a curvature of 2.5 mm, and the edge of the forming part had a curvature of 1 mm. In addition, the clearance of the punch and the forming part was 0.5 mm.

The measured forming depths were listed in [Table 1] below.

### (2) Evaluation of Wrinkle Occurrence

When the pouch film was formed using a forming device not contaminated during the above measurement of the forming depth, in the maximum forming depth, if wrinkles occurred in a cup part of the pouch film laminate, it was rated as O, and if wrinkles did not occur, it was rated as X.

Whether or not wrinkles occurred was listed in [Table 1] below.

### Experimental Example 3: Measurement of Cleaning Cycle of Lubricant during Formation of Pouch Film Laminate

When each of the pouch film laminates, prepared according to Examples 1 to 3 and Comparative Examples 1 to 6, was formed, the cleaning cycle of the lubricant was measured.

Particularly, when the pouch film laminate with a cup part formed in the maximum forming depth was produced continuously, the cleaning cycle of the lubricant was measured on the basis of the maximum number of hits without generating of wrinkles.

The measurement results were listed in [Table 1] below.

### Experimental Example 4: Measurement of Sealing Strength

The sealing strength of each of the pouch film laminates, prepared according to Examples 1 to 3 and Comparative Examples 1 to 6, was measured.

As a method of measuring the sealing strength of the pouch film laminate, the pouch film laminate was cut into a size of width 266 mm and height 200 mm, and then folded in half into a size of width 133 mm x height 200 mm to touch a silicon-based release coating layer, then an end part of a long side (200 mm) was sealed for 1.6 seconds, 3 seconds, or 5 seconds in a condition of a seal bar area of 200 mm x 8 mm, 200 °C, and 0.1 MPa, so that a pouch-typed battery case including a sealing part was prepared, and sealing strength of the pouch-type battery case was measured according to time taken for sealing.

In particular, the sealing strength was obtained by calculating the maximum value of tensile strength measured in a way that the sealing part formed in the pouch-type battery case was cut into 15 mm intervals, and then pulled in a 180° direction using UTM at room temperature at a speed of 5 mm/min.

On the basis of the calculated sealing strength, if the measured sealing strength was 10 kgf or greater, it was rated as O, and if less than 10 kgf, it was rated as X.

The evaluation results were listed in [Table 1] below.

**[Table 1]**

| | Friction coeffici ent | Forming depth [mm] | Occurren ce of wrinkles | Cleaning cycle of lubrican t [hit] | Sealing strength |
|---|---|---|---|---|---|
| Example 1 | 0.15 | 8.0 | X | 10000 | O |
| Example 2 | 0.18 | 8.0 | X | 10000 | O |
| Example 3 | 0.15 | 6.5 | X | 10000 | O |
| Comparative Example 1 | 0.5 or greater | 5.0 | X | 10000 | O |
| Comparative Example 2 | 0.3 | 6.0 | O | 10000 | X |
| Comparative Example 3 | 0.35 | 6.0 | X | 10000 | O |
| Comparative Example 4 | 0.15 | 8.0 | X | 10000 | X |
| Comparative Example 5 | 0.4 | 6.0 | X | 5000 | O |
| Comparative Example 6 | Less than 0.05 | 8.0 | O | 500 | O |

Referring to Table 1 above, in case of the pouch film laminates according to Examples 1 to 3, it can be seen that the forming depth was excellent, no wrinkle occurred during the formation, the cleaning cycle of the lubricant was also long, and the sealing strength was also excellent, compared to the pouch film laminates according to Comparative Examples 1 to 6.

### [Description of the Numbers]

1: Pouch film laminate
10: Substrate layer
12: Polyethylene terephthalate film
14: Nylon film
20: Gas barrier layer
30: Sealant layer
32: First sealant layer
34: Second sealant layer
200: Pouch-type secondary battery
210: Pouch-type battery case
220: First case
222: Cup part
224: Accommodating part
230: Second case
232: Cup part
240: Bridge part
250: Sealing part
260: Electrode assembly
270: Electrode tab
272: Positive electrode tab
274: Negative electrode tab
280: Electrode lead
282: Positive electrode lead
284: Negative electrode lead
290: Insulation part

## Claims

1. A pouch film laminate comprising
a substrate layer, a gas barrier layer, and a sealant layer laminated in sequence,
wherein the sealant layer comprises a first sealant layer disposed adjacent to the gas barrier layer, and a second sealant layer laminated on the first sealant layer,
the second sealant layer comprises a polypropylene (PP)-polydimethylsiloxane (PDMS) copolymer, and
the polypropylene (PP)-polydimethylsiloxane (PDMS) copolymer comprises polydimethylsiloxane (PDMS) in an amount of 1 wt% to 12 wt%.

2. The pouch film laminate of claim 1, wherein the second sealant layer has a thickness of 10 µm or greater.

3. The pouch film laminate of claim 1, wherein an amount of a lubricant existing on a surface of the sealant layer is less than 1 mg/m².

4. The pouch film laminate of claim 1, wherein the sealant layer has a friction coefficient of 0.05 to 0.30.

5. The pouch film laminate of claim 1, wherein the substrate layer comprises one or more among polyethylene terephthalate (PET) and nylon.

6. The pouch film laminate of claim 1, wherein the substrate layer has a thickness of 5 µm to 70 µm.

7. The pouch film laminate of claim 1, wherein the gas barrier layer comprises one or more metals selected from the group consisting of aluminum (Al), copper (Cu), stainless steel (SUS), nickel (Ni), titanium (Ti), and invar.

8. The pouch film laminate of claim 1, wherein the gas barrier layer has a thickness of 20 µm to 100 µm.

9. The pouch film laminate of claim 1, wherein the first sealant layer comprises one or more selected from polypropylene (PP), acid modified polypropylene (PPa), and cast polypropylene (CPP).

10. The pouch film laminate of claim 1, wherein the sealant layer has a thickness of 30 µm to 130 µm.

11. The pouch film laminate of claim 1, wherein the pouch film laminate has a thickness of 120 µm to 300 µm.

12. A pouch-type battery case prepared by performing a drawing formation on the pouch film laminate of claim 1.

13. A pouch-type secondary battery comprising the pouch-type battery case of claim 12.
